# EUROPÄISCHE PATENTSCHRIFT

(11) **EP 2 092 261 B1**
(45) Veröffentlichungstag und Bekanntmachung des Hinweises auf die Patenterteilung: **15.09.2010**
(21) Anmeldenummer: 07856998.5
(22) Anmeldetag: 20.12.2007
(51) Int. Cl.: F28D 20/00

(54) **ERDKOLLEKTORMODUL EINER WÄRMEPUMPE, SYSTEM, VERWENDUNG UND VERFAHREN ZUR ERRICHTUNG**
GROUND COLLECTOR MODULE FOR A HEAT PUMP, USE, AND MOUNTING METHOD
MODULE DE COLLECTEUR TERRESTRE DE POMPE À CHALEUR, UTILISATION ET PROCÉDÉ D'IMPLANTATION DE CELUI-CI

(30) Priorität: 22.12.2006 DE 202006019426 U
(43) Veröffentlichungstag der Anmeldung: 26.08.2009
(60) Teilanmeldung: 10006888.1
(73) Patentinhaber: Techconcept GbR, 96271 Grub (DE)
(72) Erfinder: KARSCH, Hans-Ulrich, 96271 Grub (DE); STEINHÄUSER, Harry, 96191 Viereth-Trunstadt/Viereth (DE)
(74) Vertreter: Koch Müller Patentanwaltsgesellschaft mbH
(86) Internationale Anmeldenummer: PCT/EP2007/011275
(87) Internationale Veröffentlichungsnummer: WO 2008/077584

(56) Entgegenhaltungen:
- EP-A- 1 655 566
- AT-B- 344 373
- CH-A5- 610 093
- DE-A1- 4 114 076
- DE-A1- 19 727 922
- DE-A1-102004 052 447
- DE-U1-202007 004 243
- FR-A- 2 495 291
- US-A1- 2006 249 276

## Beschreibung

Die Erfindung betrifft ein Erdkollektormodul einer Wärmepumpe, ein System, eine Verwendung und ein Verfahren zur Errichtung. Ein Erdkollektormodul nach dem Oberbegriff des Anspruchs 1 ist aus DE-A-2004 052 447 bekannt.

Eine Wärmepumpe ist eine Maschine, die Wärme von einem niedrigen Temperaturniveau unter Aufwand von Arbeit auf ein höheres Temperaturniveau transportiert. Eine Bauform einer Wärmepumpe ist beispielsweise eine Kompressions-Wärmepumpe, bei der der physikalische Effekt der Verdampfungswärme genutzt wird. Die Kompressions-Wärmepumpe weist daher einen Kondensator, eine Drossel, einen Verdampfer und einen Kompressor auf. In einem geschlossenen Strömungskreislauf zirkuliert ein Kältemittel, das angetrieben durch den Kompressor die Aggregatzustände flüssig und gasförmig abwechselnd annimmt. Weiterhin gibt es beispielsweise Absorptions- bzw. Adsorptions-Wärmepumpen.

Als Wärmepumpenheizung kann eine Wärmepumpe beispielsweise zum Beheizen von Gebäuden verwendet werden. Als Wärmequellen können grundsätzlich die Luft, (Grund-) Wasser oder Erdreich dienen. Als Verdampfer dient daher beispielsweise ein Luftkollektor, ein Erdkollektor oder eine Solarabsorber. In der AT 413 302 B werden diese in Reihe geschaltet und können mit einer Bypassleitung einzeln umgangen werden.

Um die Erdwärme für Wärmepumpen nutzen zu können, werden Kollektoren eingesetzt, die aus einer im Erdreich verlegten Kollektorleitung für einen Wärmeträger bestehen. Über den Wärmeträger, der durch das Kältemittel der Wärmepumpe selbst oder durch ein mit diesem Kältemittel im Wärmeaustausch stehendes Medium gebildet werden kann, wird dem Erdreich Wärme entzogen, das demnach abgekühlt wird.

Erdkollektoren sind wiederum in verschiedenen Bauformen bekannt. Aus der DE 31 14 262 A1 ist ein Erdkollektor mit stemstrahlenförmig verlegten Erdsonden bekannt, die eine Länge von 12 m bis 50 m aufweisen und entsprechend tief in das Erdreich eingebracht werden. Weiterhin sind brunnenartige Erdkollektoren beispielsweise aus der AT 379 892, der AT 369 887 oder der DE 39 13 429 A1 bekannt, wobei die brunnenartige Erdöffnung durch einen breiartig fließfähigen Schlamm verfüllt wird.

Weiterhin sind flächige Kollektoren bekannt, wobei eine Kollektorleitung innerhalb einer vorgegebenen Kollektorfläche verlegt ist. Dabei kann bezüglich der Erdoberfläche zwischen horizontal und vertikal verlegten Kollektoren unterschieden werden.

Ein horizontal verlegter Horizontalkollektor ist beispielsweise aus der AT 406 521 B bekannt. Dort ist eine Drainage zur Entwässerung vorgesehen, die zugleich eine Belüftung des Erdkollektors mit Luft bewirken soll, die durch einen Sonnenkollektor erwärmt ist. Aus der DE 102 00 106 A1 ist ebenfalls eine Horizontalkollektor bekannt, der zusätzlich eine Versickerungsanlage für Regenwasser aufweist, da die Wärmeabgabe von nassem Erdreich gegenüber trockenem Erdreich 2:1 betragen soll. Die Rohre des Erdkollektors werden ausgehend von zwei tiefen Gräben mittels eines Horizontalbohrgerätes verlegt. Zur Ausbildung eines durchgehenden Rohrsystems werden die Enden der Rohre durch Verbindungsbögen verbunden.

Ein Vertikalkollektor ist beispielsweise aus der US 4,106,555 bekannt. Dort ist eine gut wärmeleitende Platte aus Stahl vorgesehen, an die Metallrohre geschweißt sind. Für einen verbesserten Wärmeübergang und einen Rostschutz wird die Platte mit einem Fett versehen. Zusätzlich ist eine separate, automatisierte Bewässerungsanlage vorgesehen, die eine Befeuchtung der Stahlplatte ermöglicht. Aus der DE 29 13 333 C2 ist ebenfalls ein Vertikalkollektor mit einem aufrecht angeordneten länglichen plattenförmigen metallischen Wärmetauscherelement ebenfalls mit einem hohen Wärmeleitvermögen bekannt, an dem zur Zu- und Ableitung eines Wärmetauschermediums eine Rohrleitung angeschweißt ist. Das Wärmetauscherelement weist eine Schneide auf, um es in seiner Längsrichtung senkrecht nach unten ins Erdreich zu treiben.

Aufgrund des hohen Gewichtes und der schlechten Umweltverträglichkeit von Metallrohren werden in der AT 378 260 Rohre aus biegsamem Kunststoff verwendet. Zur Verlegung des Erdkollektors wird ein 0,5 m bis 1 m breiter Graben (50-fache des Rohrdurchmessers) ausgehoben, in dem der Kollektor senkrecht oder entlang der Grabenwände angeordnet wird. Die biegsamen Kunststoffrohre sind zueinander parallel angeordnet und durch Distanzhalter zueinander fixiert, wobei die Distanzhalter eine Schiene mit Federklammern aufweisen, die das Rohr in Dreipunktberührung umgreifen. Um den Erdkollektor zu befestigen werden die Distanzhalter mit einer verlängerten Spitze fest ins Erdreich geschlagen. Ein vorgefertigtes Element aus biegsamen Rohren und Distanzhaltern wird in Form einer Kabelrolle aufgerollt zur Baustelle befördert und erst dort auf das erforderliche Maß abgelängt. Die Enden der Rohre werden an ein jeweils zugeordnetes Vorlauf- bzw. Rücklaufverteilerrohr sowie mit ihrem anderen Ende gemeinsam an ein Umlenkverteilerrohr angeschlossen.

Aus der EP 1 655 566 A2 ist ein Absorbersystem bekannt, dass flexibel an unterschiedliche Boden- bzw. Bauwerksgeometrien bzw. -formationen, zum Beispiel Tunnel anpassbar ist. Hierzu ist auf einer flexiblen Trägerlage ein Rohr- oder Schlauchsystem aus flexiblen Rohren oder Schläuchen befestigt. Die Trägerlage besteht aus einer Folie, Vlies, Geotextil, aus Endlos- oder Stapelfasern aus Kunststoff, wie Polyolefinfasem wie Polypropylen oder Polyethylen oder Polyvinylchlorid.

Aus der CH-A 61 0093 ist eine beheizbare Fläche für Raumwände bekannt. Die Fläche wird zur häuslichen Beheizung eingesetzt. Sie setzt sich zusammen aus ein oder zwei inneren Schichten, die ein langes Röhrchen umschließen, das heißes Wasser oder eine andere erwärmte Flüssigkeit (35°C - 40°C) transportiert. Das besagte Röhrchen kann aus Plastik sein. Das Röhrchen weist einen Durchmesser auf, dass es in die Vertiefungen von Wellpappe und das Ganze in Linoleum passt. Aus der AT-A-344 373 ist bekannt Schlitze mit einem Spezialbagger auszuheben.

Die Erfindung liegt die Aufgabe zu Grunde eine Bauart eines Erdkollektors anzugeben, die die Aufwendungen möglichst reduziert.

Die Aufgabe wird durch ein Erdkollektormodul gemäß den Merkmalen des Anspruchs 1 gelöst. Vorteilhafte Weiterbildungen sind Gegenstand von abhängigen Ansprüchen.

Demzufolge ist ein Erdkollektormodul für eine Wärmepumpe vorgesehen. Unter einem Modul ist dabei eine Baueinheit zu verstehen, die vorgefertigt und als Einheit angeliefert werden kann. Das Erdkollektormodul kann für eine bezüglich der Erdoberfläche horizontale Errichtung ausgebildet sein. Bevorzugt ist das Erdkollektormodul jedoch für eine bezüglich der Erdoberfläche vertikale Errichtung ausgebildet.

Das Erdkollektormodul weist einen Träger mit einer ebenen Form auf, wobei der Träger formstabil ausgebildet ist. Der Träger weist ein im Erdreich auflösbares Material auf.

Die ebene Form des Trägers bewirkt eine im Vergleich zur Länge und Tiefe wesentlich kleinere Breite des Trägers. Eine Planarität des Trägers ist nicht erforderlich. So kann beispielsweise der Träger auch Ösen zum Durchfädeln eines Rohres aufweisen. Jedoch sollte die Breite des Trägers vorzugsweise möglichst klein ausgebildet werden, um beispielsweise eine Breite eines zugehörigen Schlitzes im Erdreich entsprechend klein ausbilden zu können.

Der formstabile Träger ist lediglich für die Errichtung des Erdkollektors notwendig. Der Träger kann so als Baueinheit gehandhabt werden. Der Träger weist daher ein im Erdreich auflösbares Material auf. Vorzugsweise ist das Material des Trägers bei Zufügung einer Flüssigkeit lösbar. Vorteilhafterweise ist das Material dabei wasserlöslich. Eine andere Weiterbildungsvariante sieht vor, dass das auslösbare Material im Erdreich verrottbares Material ist, das beispielsweise durch Mikroorganismen, Regenwürmer oder dergleichen zersetzt wird. Das verrottbare Material ist vorteilhafterweise Holz, kompostierbare ein- oder mehrwellige Pappe oder mehrlagiges Papier. Vorzugsweise ist der Träger aus im Erdreich auflösbarem Material ohne Öffnungen für eine flexible Positionierung von Befestigungsmitteln ausgebildet. Alternativ kann der Träger aus im Erdreich auflösbarem Material für eine bessere Wärmkopplung beidseitig des Trägers vor dessen Auflösung Öffnungen oder eine Gitterstruktur aufweisen.

Weiterhin weist das Erdkollektormodul ein flexibles Kunststoffrohr auf, das für ein durchlaufendes Rohrsystem als durchgehende Schlaufe über die gesamte Ebene des Trägers verlegt und auf dem Träger befestigt ist. Unter einer durchgehenden Schlaufe wird dabei verstanden, dass diese keine Abzweigung, Verteiler oder dergleichen aufweist. Das als durchgehende Schlaufe positionierte Kunststoffrohr kann daher auch als Rohrschlange bezeichnet werden. Das flexible Kunststoffrohr kann dabei einseitig oder beidseitig des Trägers verlegt sein.

Bevorzugt ist das flexible Kunststoffrohr an Kreuzungspunkten zwischen der Gitterstruktur und dem flexiblen Kunststoffrohr am Träger befestigt. Bevorzugt weist das flexible Kunststoffrohr zur Gitterstruktur lediglich Punktberührungen auf.

Die Modularität ermöglicht es, je nach Umgebungsbedingungen, wie Bodenbeschaffenheit, Abmessungen etc. Durchmesser und Verlegungsformen des flexiblen Kunststoffrohres auf dem Träger anzupassen. Der Träger weist eine derartige Formstabilität auf, dass insbesondere während der Errichtung des Erdkollektors Abschnitte des flexiblen Kunststoffrohres zueinander auf Distanz gehalten werden können. Die Befestigung des auf dem Träger verlegten flexiblen Kunststoffrohres bewirkt die Beibehaltung der geometrischen Form der Rohrverlegung, wie beispielsweise eine Spirale oder dergleichen, auf dem Träger. Unter Beibehaltung der Form der Rohrverlegung werden auch geringe Abweichungen innerhalb eines Toleranzbereichs verstanden, die jedoch eine Berührung von Abschnitten des flexiblen Kunststoffrohres aneinander nicht zulassen.

Das Kunststoffrohr ist vorzugsweise hochdruckvernetzt. Das Kunststoffrohr ist vorzugsweise auf dem Träger kreuzungsfrei verlegt. Beispielsweise ist das Kunststoffrohr auf dem Träger mäanderförmig oder spiralförmig verlegt.

Die Kombination von Träger mit Gitterstruktur und flexiblem Kunststoffrohr ermöglicht positionsflexible Befestigung des Kunststoffrohres in Abhängigkeit von weiteren Parametern, wie beispielsweise dem Rohrdurchmesser oder der Art der Wärmequelle (Grundwasser etc.).

Gemäß einer vorteilhaften Weiterbildung der Erfindung ist der Träger nicht mehr als fünfmal so schwer wie das verlegte Kunststoffrohr. Hierzu ist der Träger insbesondere aus Wellpappe gebildet. Vorzugsweise weist der Träger ebenfalls ein geringes Eigenvolumen auf, so dass der Wärmetransport nur unwesentlich beeinträchtigt. Ebenfalls ist es vorteilhaft den Träger innen hohl auszubilden, so dass nach der Positionierung des Moduls in der gewünschten Betriebsstellung der Träger mit einer insbesondere gut wärmeleitfähigen Flüssigkeit, wie beispielsweise Wasser gefüllt werden kann.

Der Träger weist zusätzlich zur Positionierung und Fixierung des Kunststoffrohres in Synergie zumindest eine weitere Funktion auf. Gemäß einer wiederum anderen Weiterbildungsvariante ist an dem Träger ein Bewässerungssystem befestigt. Beispielsweise kann der Träger hohl ausgebildet sein und Öffnungen zur Befeuchtung des Erdreiches aufweisen. Hierzu ist der Träger vorteilhafterweise an das Bewässerungssystem angeschlossen. Für eine weitere vorteilhafte, auch kombinierbare Funktion des Trägers weist der Träger an seinen Rändern einen Fortsatz insbesondere in Form eines Überstands auf, so dass das Kunststoffrohr bezüglich dieses Fortsatzes weiter innen innerhalb der Ebene des Trägers befestigt ist und durch den Fortsatz beispielsweise gegen Beschädigungen durch Steine im Erdreich geschützt ist.

In einer anderen vorteilhaften Weiterbildungsvariante ist vorgesehen, dass ein Endbereich des flexiblen Kunststoffrohres in einer Vormontageposition an dem Träger lösbar befestigt ist. Zur Lösbaren Befestigung kann beispielsweise eine Clipsverbindung oder Klemmverbindung vorgesehen sein. Alternativ kann auch ein mittels einer Schneidzange durchtrennbarer Kabelbinder zu Befestigung des flexiblen Kunststoffrohres und/oder dessen Endbereich verwendet werden.

In einer vorteilhaften Ausgestaltung der Erfindung ist vorgesehen, dass ein separates Befestigungsmittel, insbesondere ein Kunststoffclip oder eine Klammer, zur Befestigung des flexiblen Kunststoffrohres am Träger vorgesehen ist. Vorzugsweise weist der Träger in Gitterstruktur eine Struktur auf, die eine entlang von Verstrebungen der Gitterstruktur frei wählbare Positionierung des Befestigungsmittels auf dem Träger ermöglicht. Hingegen weist ein Träger mit einer durchgehenden Fläche aus im Erdreich auflösbaren Material eine derartige Härte auf, dass eine Klammer oder Krampe (beispielsweise aus Kunststoff, Holz oder Metall) im Material des Trägers durch Einstecken oder Einschießen befestigt werden kann.

Gemäß einer vorteilhaften Weiterbildung ist das Kunststoffrohr zwischen zwei Schichten des Trägers angeordnet. Beispielsweise werden hierzu zwei Lagen Pappe jeweils in einem Zwischenraum zwischen Abschnitten des Kunststoffrohres aneinander befestigt. Vorteilhafterweise weist der Träger zudem Öffnungen zum Tragen und Transportieren des Erdkollektormoduls auf.

Ein weiterer Aspekt der Erfindung ist eine Verwendung eines zuvor erläuterten Erdkollektormoduls für eine Wärmepumpe eines Gebäudes. Ein anderer Aspekt der Erfindung ist eine Verwendung des zuvor erläuterten Erdkollektormoduls zur Temperierung eines Sportplatzes, wobei mittels eines Wärmetauschermediums der Oberfläche des Sportplatzes Wärme zugeführt oder von der Oberfläche des Sportplatzes Wärme abgeführt werden kann. Beispielsweise kann im Winter zur Enteisung der Sportplatz geheizt werden. Hingegen wird im Sommer dem Sportplatz Wärme entzogen und diese beispielweise für eine Heizung oder Warmwasserbereitung eines Sportgebäudes genutzt. Ein anderer Aspekt der Erfindung ist eine Verwendung des zuvor erläuterten Erdkollektormoduls zur Temperierung von Verkehrswegen. In Doppelfunktion können kann eine Vereisung der Verkehrswege verhindert werden bzw. die Wärmeenergie im Verkehrsweg zur Heizung von Gebäuden genutzt werden.

Ein weiterer Aspekt der Erfindung ist ein System mit den Merkmalen des Anspruchs 7. Vorteilhafte Weiterbildungen sind Gegenstand von abhängigen Ansprüchen und in der Beschreibung enthalten.

Demzufolge ist ein System mit einem aus einer Vielzahl von Erdkollektorsmodulen errichteten Erdkollektor vorgesehen. Vorzugsweise sind die Erdkollektormodule entsprechend gemäß der vorhergehenden Beschreibung ausgebildet. Zur Errichtung sind die Erdkollektormodule vorzugsweise in ins Erdreich gefräste Schlitze eingefügt. Der errichtete Erdkollektor ist in einem geschlossenen Kreis mit Vorlauf und Rücklauf zusammengeschlossen. In den Rücklauf wird ein Wärmetauschermedium von den Wärmepumpen in den Gebäuden abgegeben. Das Wärmetauschermedium wird im Heizbetrieb von Erdwärme in den Rohren der Erdkollektormodule erwärmt und über den Vorlauf zu den Wärmepumpen geführt. Im Kühlbetrieb kann die Wärmepumpe durch Öffnen eines Bypass-Ventils umgangen werden. Das Wärmetauschermedium wird für den Kühlbetrieb in den Rohren der Erdkollektormodule durch das kühlere Erdreich gekühlt.

Das System weist eine Mehrzahl von Energieübergabestellen für Wärmepumpen von verschiedenen Gebäuden auf, die mit dem Vorlauf und dem Rücklauf verbunden sind. Zur Verbindung weist der Vorlauf und der Rücklauf an der Energieübergabestelle vorzugsweise eine Verzweigung auf. Die Energieübergabestellen steuern dabei den Zu- bzw. Abfluss des Wärmetauschermediums bezüglich Vorlauf bzw. Rücklauf. Vorteilhafterweise weisen die Energieübergabestellen zumindest ein Ventil zur Steuerung des Zuflusses und/oder des Abflusses des Wärmetauschermediums auf. Vorzugsweise ist eine Pumpe zur Förderung des Wärmetauschermediums innerhalb des Systems vorgesehen.

Jeweils eine Energieübergabestelle ist für jedes der Gebäude vorgesehen. Die Energieübergabestelle ist vorzugsweise ausgebildet die Menge der zu übergebenden Wärmeenergie zu regeln. Für jedes Gebäude ist zumindest eine Wärmepumpe vorgesehen, die mit der Energieübergabestelle verbunden ist. Jede Energieübergabestelle ist mit dem Vorlauf und mit dem Rücklauf zu einem geschlossenen Kreislauf verbunden. Für die Verbindung ist vorzugsweise eine Abzweigung vorgesehen. Die Abzweigung kann beispielsweise eine T-Rohrstück oder ein 3-Wege-Ventil aufweisen. In dem geschlossenen Kreislauf ist das Wärmetauschermedium als strömungsfähiges Medium vorgesehen. Als Wärmetauschermedium eignet sich beispielsweise Sole oder Wasser, ein Kältemittel oder ein Gemisch dieser Flüssigkeiten.

Eine andere Weiterbildungsvariante sieht vor, dass das Wärmetauschermedium im Vorlauf, Rücklauf und in den Erdkollektormodulen des Erdkollektors eine Temperatur aufweist, die kleiner oder gleich einer Temperatur des Erdreichs ist.

Gemäß einer anderen vorteilhaften Weiterbildungsvariante ist zumindest eine Pumpe vorgesehen, die mit dem Vorlauf und/oder dem Rücklauf zum Pumpen des Wärmetauschermediums im geschlossenen Kreislauf verbunden ist.

In einer anderen vorteilhaften Weiterbildung ist ein Volumenstromregler vorgesehen, der mit der jeweiligen Wärmepumpe und dem Vorlauf und/oder dem Rücklauf verbunden ist. Der Volumenstromregler ist vorteilhafterweise ein Proportionalregler. Vorzugsweise weist die Energieübergabestelle den Volumenstromregler auf. Der Volumenstromregler ist ausgebildet die Durchlaufmenge des Wärmetauschermediums durch die Wärmepumpe aus dem (Primär-)Kreislauf (mit Vorlauf und Rücklauf) zu begrenzen. Die Begrenzung der Durchlaufmenge ist dabei abhängig von der Leistung der Wärmepumpe.

Gemäß einer anderen Weiterbildungsvariante ist ein Differenzdruckregler vorgesehen, der mit der jeweiligen Wärmepumpe und dem Vorlauf und/oder dem Rücklauf verbunden ist. Vorzugsweise weist die Energieübergabestelle den Differenzdruckregler auf. Bevorzugt ist der Differenzdruckregler ausgebildet Druckschwankungen in den Rohren des Vorlaufs und des Rücklaufs auszuregeln. Hierdurch wird ein Hydraulischer Abgleich des Versorgungssystems ermöglicht.

In einer besonders bevorzugten Weiterbildung ist vorgesehen, dass die Energieübergabestelle sowohl den Volumenstromregler als auch den Differenzdruckregler aufweist.

Alternativ zu einem Volumenstromregler und/oder einem Differenzdruckregler wird in einer anderen, auch kombinierbaren Ausgestaltungsvariante ein Wärmetauscher mit dem Vorlauf und dem Rücklauf und mit der Wärmepumpe verbunden.

Ein weiterer Aspekt der Erfindung ist eine Verwendung einer agrarwirtschaftlich oder für eine Photovoltaikanlage genutzten Fläche für die Errichtung eines Erdkollektors eines zuvor erläuterten Systems. Vorzugsweise wird die Fläche dabei in Synergie für mehrere

Funktionen verwendet. So kann die Agrarfläche auch nach der Errichtung des Erdkollektors weiterhin als Agrarfläche verwendet werden. Ebenso kann die Fläche zugleich für die Photovoltaikanlage als auch für den Erdkollektor verwendet werden.

Ein weiterer Aspekt der Erfindung ist ein Verfahren mit den Merkmale des Anspruchs 9. Vorteilhafte Weiterbildungen sind Gegenstand von abhängigen Ansprüchen und in der Beschreibung enthalten.

Demgemäß ist ein Verfahren zur Errichtung eines Erdkollektors vorgesehen. Dabei wird zur Errichtung ein Erdkollektormodul mit einem formstabilen Träger und mit einem flexiblen, als durchlaufendes Rohrsystem auf dem Träger angeordneten Kunststoffrohr montiert. Die Montage des Erdkollektormoduls erfolgt vorzugsweise vor einem Transport des Erdkollektormoduls zur Baustelle. Der formstabile Träger weist ein im Erdreich auflösbares Material auf.

In der Baustelle wird zur Errichtung des Erdkollektors ein Schlitz mittels einer Fräse in das Erdreich gefräst. Nachfolgend wird das vormontierte Erdkollektormodul in den Schlitz eingeführt. Vorzugsweise weist der Schlitz eine Tiefe auf, die mindestens der Summe der Frosttiefe des Bodens und der Höhe des Erdkollektormoduls entspricht.

Nachfolgend wird der Schlitz mit einem Füllmaterial verfüllt. Vorzugsweise ist das Füllmaterial das für den Schlitz aus dem Erdreich herausgefräste Material, das mit dem Fräsvorgang zudem zerkleinert wurde. Vorzugsweise wird das Füllmaterial mit Hilfe einer Flüssigkeit wie Wasser in den Schlitz eingeschwemmt.

Gemäß einer vorteilhaften Weiterbildung werden lösbar am Erdkollektor befestigte Endbereiche des flexiblen Kunststoffrohres gelöst und aus dem Schlitz herausgeführt. Vorteilhafterweise werden auch die Endbereiche unterhalb der Frostgrenze und/oder in einem Schacht verlegt.

Gemäß einer vorteilhaften Weiterbildung ist vorgesehen, dass die Breite des Schlitzes im Erdreich maximal das Dreifache der Breite des Erdkollektormoduls beträgt. Unter Breite wird sowohl beim Schlitz als auch beim Erdkollektormodul die Abmessung der kleinsten Ausdehnung verstanden. Vorteilhafterweise beträgt die Breite des Kollektormoduls zwischen 3 und 10 cm, bevorzugt zwischen 5 und 8 cm.

Die zuvor beschriebenen Weiterbildungsvarianten sind sowohl einzeln als auch in Kombination besonders vorteilhaft. Dabei können sämtliche Weiterbildungsvarianten untereinander kombiniert werden. Einige mögliche Kombinationen sind in der Beschreibung der Ausführungsbeispiele der Figuren erläutert. Diese dort dargestellten Möglichkeiten von Kombinationen der Weiterbildungsvarianten untereinander sind jedoch nicht abschließend.

Im Folgenden wird die Erfindung in Ausführungsbeispielen anhand von zeichnerischen Darstellungen näher erläutert. Die Beispiele der Figuren 1, 2a, 2b und 3 sind nicht Gegenstand des Patentschutzes.

Es zeigen
- Fig. 1: eine schematische Ansicht eines errichteten Erdkollektors für eine Wärmepumpe eines Hauses,
- Figuren 2a und 2b: schematische Ansichten eines Erdkollektormoduls,
- Fig.3: eine schematische Draufsicht eines in einen Erdschlitz eingeführten Erdkollektormoduls,
- Fig. 4: eine schematische Ansicht eines Befestigungselements,
- Fig. 5a: schematische Ansicht eines Erdkollektormoduls eines weiteren Ausführungsbeispiels,
- Fig. 5b: schematische Schnittansicht einer Befestigung eines flexiblen Kunststoffrohres auf einem Träger, und
- Fig. 6: eine schematische Ansicht eines Systems mit einer Vielzahl von Erdkollektormodulen.

Die durch eine Wärmepumpe erzielbare Wärmeleistung ist abhängig von der Beschaffenheit des Bodens. Trockene, grobkörnige Böden sind für den Wärmetransport schlechter geeignet als feuchte Grundwasserböden. Feste Erdböden weisen zudem eine bessere Wärmeleitfähigkeit auf als lose aufgeschüttete Böden. Deshalb variiert die Leistung dieser Kollektoren von 10 W/m² bei trockenen Böden bis zu 35 W/m² bei Grundwasserböden. Bei 20 W/m² Wärmeeintragsleistung bedeutet dies, dass man für eine Wärmepumpenheizung mit 6 kW Leistung etwa 300 m² Bodenfläche benötigt. Das entspricht überschlägig etwa einer Fläche, die doppelt so groß ist wie die zu beheizende Wohnfläche.

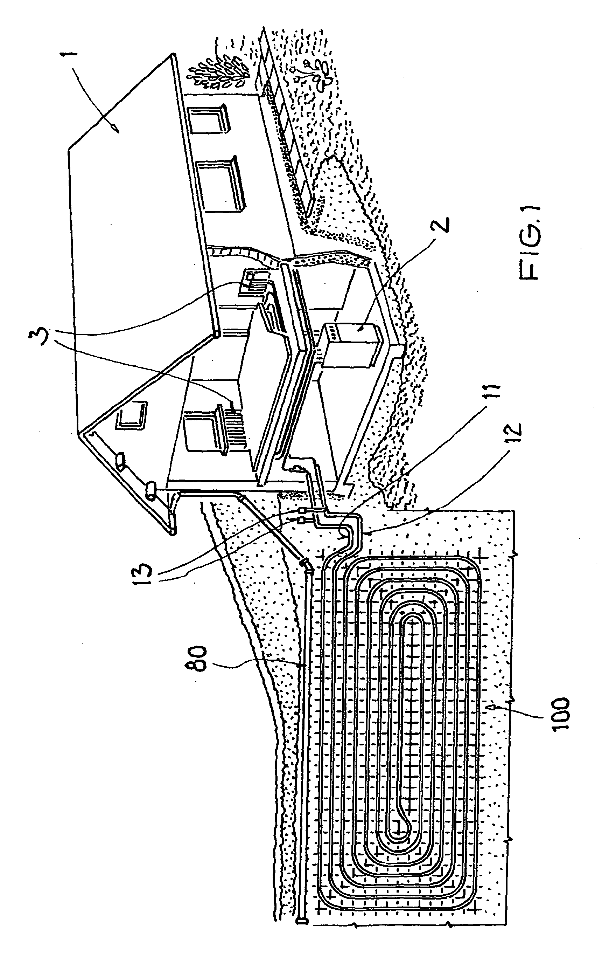

Bevorzugt wird daher - wie in Fig. 1 dargestellt - ein vertikaler Erdkollektor errichtet. Wie aus Fig. 1 ersichtlich, gelangt ein dargestelltes Erdkollektormodul 100 für eine Wärmepumpe zur Anwendung. Wobei ein Kompressor und Steuereinheiten in der Baueinheit 2 ausgebildet sind. Die Baueinheit 2 ist in einem Haus 1 installiert. Die Wärmepumpe dient dazu die vom Erdkollektormodul 100 aufgenommene, als Primärenergie dienende Erdwärme mittels Zufuhr von Sekundärenergie auf ein höheres Temperaturniveau zu bringen, um damit eine Heizungsanlage 3 des Hauses 1 zu beschicken. Auch ist der umgekehrte Betrieb mit der Wärmepumpe möglich, indem die Wärmepumpe in einem Kühlbetrieb arbeitet und Wärme dem Haus 1 entzieht. In Fig. 1 ist beispielhaft ein einziges Erdkollektormodul 100 dargestellt. Je nach Größe der Wohnfläche und Größe des Erdkollektormoduls 100 ist für eine ausreichende Heizleistung ggf. eine Mehrzahl von Erdkollektormodulen 100 erforderlich. In diesem Fall werden Verteiler für das Kältemittel zwischen die Erdkollektormodule 100 und die Baueinheit 2 geschaltet (in Fig. 1 nicht dargestellt). Die Zuleitung zu den einzelnen Erdkollektormodulen 100 kann sternförmig angeordnet sein. Kleinere Erdkollektormodule können auch direkt miteinander gekoppelt werden. Beispielsweise bilden die gekoppelten Erdkollektormodule ein durchlaufendes Rohrsystem.

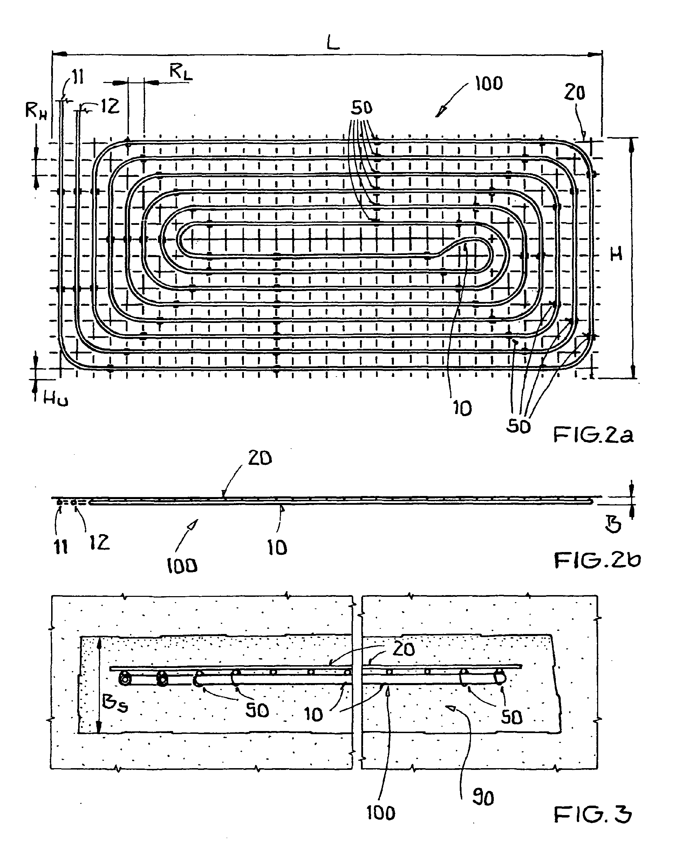

Fig. 2a zeigt eine schematische Draufsicht auf eine Ebene eines Erdkollektormoduls 100. Das Erdkollektormodul 100 weist einen Träger 20 auf, der als formstabile Gitterstruktur mit den Rastermaßen R_{H} und R_{L} ausgebildet ist. Die Rastermaße betragen beispielsweise 150 mm. Die Gitterstruktur weist beispielsweise Längs- und Querstreben auf. Auf dem Träger 20 ist ein flexibles Kunststoffrohr 10 in einer durchgehenden Schlaufe verlegt. Die Schlaufe der Fig. 2a weist keine Kreuzungen des flexiblen Kunststoffrohres 10 auf. An Kreuzungspunkten zwischen dem Träger 20 und dem flexiblen Kunststoffrohr 10 sind Befestigungsmittel 50 in Form von Kabelbindern, Kunststoffclipsen oder dergleichen vorgesehen, die das flexible Kunststoffrohr 10 auf dem Träger 20 in der verlegten Position fixieren. Vorteilhafterweise ist das flexible Kunststoffrohr 10 mittels der Befestigungsmittel 50 in einer Längsrichtung des flexiblen Kunststoffrohres 10 verschiebbar gelagert, so dass Erdbewegungen und unterschiedliche Ausdehnungskoeffizienten zwischen flexiblem Kunststoffrohr 10 und Träger 20 ausgeglichen werden können und nicht zu einer Beschädigung des flexiblen Kunststoffrohres 10 führen.

Das Erdkollektormodul 100 weist gemäß Fig. 2a eine Höhe H und eine Länge L auf. Eine Breite B des Erdkollektormoduls 100 ist in Fig. 2b dargestellt. Die Höhe H beträgt beispielsweise 2200 mm und die Länge L beträgt beispielsweise 5000 mm. Um eine sehr geringe Breite B von kleiner als 50 mm zu erhalten kann als Träger 20 ein Gitter aus Stahldrähten mit einem Durchmesser von nur 8 mm verwendet werden. Ein Träger 20 aus Metall führt jedoch zu einer zusätzlichen Umweltbelastung, so dass ein derartiger Träger 20 aus Metall nicht in Wasserschutzgebieten und im Grundwasserbereich eingesetzt werden sollte.

Der Träger 20 ist nur ein Hilfsmittel um das flexible Kunststoffrohr 10 in seiner benötigten Verlegungsform ins Erdreich einbringen zu können. Der Träger 20 kann daher aus einem umweltneutralen Material - wie beispielsweise Kunststoff - ausgebildet sein. Wird ein Träger 20 aus Kunststoff verwendet, so wird durch die Gitterstruktur erzielt, dass sich das Erdreich um das Kunststoffrohr 10 anlegen kann. Dies bewirkt eine gute Wärmekopplung und daher einen guten Wärmeleitwert zwischen Erdreich und Kunststoffrohr 10 zu beiden Seiten des Trägers 20. Das verwendete Kunststoffrohr 10 hat dabei gegenüber Rohren aus Metall den großen Vorteil, dass sich die Verarbeitung schneller und somit kostengünstig realisieren lässt. Durch die Verwendung eines Kunststoffrohres 10 wird zudem der Boden nicht belastet. Somit kann das Erdkollektormodul 100 mit einem Träger 20 aus Kunststoff und dem flexiblen Kunststoffrohr 10 auch in Bereichen von Wasserschutzgebieten eingesetzt werden. Gitterstrukturen weisen zudem gegenüber einem vollflächigen Träger den Vorteil auf, dass ein besseres Verhältnis von Gewicht zu Stabilität erzielt werden kann. Dies ermöglicht die Herstellung leichterer Erdkollektormodule 100 und damit eine durch die Gewichtsreduktion verbesserte Handhabbarkeit bei der Errichtung eines Erdkollektors.

Ein wesentlicher Vorteil bei der Verwendung eines flexiblen Kunststoffrohres 10 und einem Träger 20 aus Kunststoff ist, dass ein Gewichtsvorteil des Erdkollektormoduls 100 sowohl beim Einbau als auch beim Transport erzielt werden kann. Vorzugsweise ist daher auch der Träger 20 in einer Art Kunststoffausführung herzustellen, damit der Gewichtsvorteil erhalten bleibt. Ein weiterer Vorteil des Einsatzes eines Kunststoffrohres 10 ist, dass das Risiko von Rohrschäden bei eventuellen Erdbewegungen aufgrund der Flexibilität des Kunststoffrohres 10 vernachlässigbar klein ist. Wird der Träger 20 aus Kunststoff ausgebildet, können die Befestigungselemente 50 mit dem Träger 20 einstückig ausgeformt werden, so dass eine zusätzliche Montage der Befestigungselemente 50 entfällt. Die Befestigungselemente 50 sind dabei derart auszugestalten, dass diese das flexible Kunststoffrohr 10 nur auf einer kleinen Rohraußenfläche halten. Dies kann beispielsweise durch eine Dreipunktberührung erfolgen.

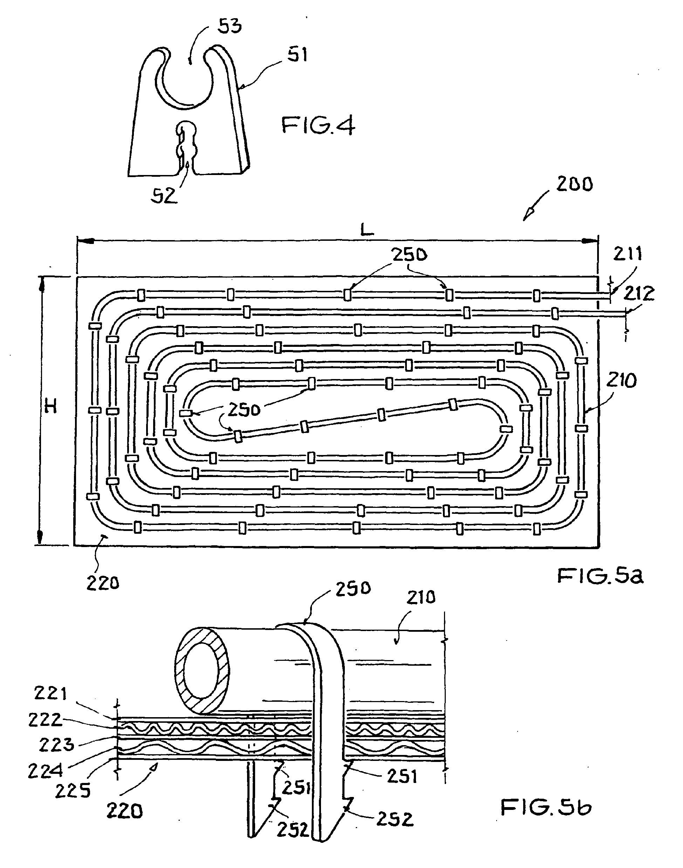

Ein separates Befestigungselement 51 ist in der Fig. 4 schematisch dargestellt. Das Befestigungselement 51 ist vorzugsweise aus Kunststoff ausgebildet. Es weist eine Aufnahme 53 zum Halten des Kunststoffrohres 10 auf. Der Aufnahme 53 gegenüber ist ein Einführungsöffnung 52 zur clipsbaren Befestigung auf dem Träger 20 vorgesehen. Der Träger 20 kann zur Befestigung alternativ eine Polyethylen-Folie aufweisen. Eine dünne Polyethylen-Folie weist dabei eine vernachlässigbare Wärmeisolierung auf.

Endbereiche 11 und 12 des Kunststoffrohres 10 sind in der Fig. 2a in einer Transportposition oder Vormontageposition an dem Träger 20 lösbar befestigt, sodass eine Beschädigung der Endbereiche während des Transportes des Erdkollektormoduls 100 vermieden werden kann. Die Endbereich 11, 12 sind vorteilhafterweise der Vorlaufanschluss und der Rücklaufanschluss. Die Verbindung der Endbereiche 11, 12 beispielsweise mit einem Verteiler kann mittels Verschraubtechnik hergestellt werden. Weiterhin weist der Träger 20 einen Fortsatz mit dem Maß H_{U} auf, der das montierte flexible Kunststoffrohr 10 vom Rand des Trägers 20 beabstandet. Der Fortsatz bewirkt dabei eine Beabstandung des montierten flexiblen Kunststoffrohrs 10 vom Erdreich.

Aufgrund der kompakten Bauform des Erdkollektormoduls 100 aus den Figuren 2a und 2b ist eine besonders schnelle Errichtung des Erdkollektors möglich ohne einen großen Aushub von Erdreich bewegen zu müssen. Hierzu wird vor einem Transport zur Baustelle das Erdkollektormodul 100 mit dem formstabilen Träger 20 und mit dem flexiblen, als durchlaufendes Rohrsystem auf dem Träger 20 angeordnetem Kunststoffrohr 10 montiert. Zur Errichtung wird ein Schlitz 90 in das Erdreich mittels einer Grabenfräse gefräst und das Erdkollektormodul 100 in den Schlitz 90 eingeführt. Dieser Zustand ist in der Fig. 3 als Draufsicht auf den Schlitz 90 im Erdreich schematisch dargestellt. Die Breite B_{S} des Schlitzes 90 im Erdreich muss dabei nur unwesentlich größer als die Breite B des Erdkollektormoduls 100 ausgebildet sein, da in den Schlitz 90 keine Person zur Errichtung des Erdkollektors einsteigen muss.

Die lösbar am Träger 20 befestigten Endbereiche 11, 12 des flexiblen Kunststoffrohres 10 werden gelöst und aus dem Schlitz 90 herausgeführt. Dies ist in der Fig. 1 schematisch dargestellt. Die Endbereiche 11, 12 werden in einem Schacht verlegt und an Entlüftungsrohre 13 angeschlossen. Der Schlitz 90 gemäß Fig. 3 wird nachfolgend mit einem Füllmaterial verfüllt, das beim Fräsvorgang aus dem Erdreich entnommen wurde. Dieses Füllmaterial ist durch den Fräsvorgang fein ausgebildet und weist daher keine größeren Steine mehr auf, deren scharfe Kanten das flexible Kunststoffrohr 10 ggf. beschädigen könnten. Auch werden größere Hohlräume (Lunker) aufgrund des feinen Füllmaterials vermieden. Zur Verfüllung mit dem Füllmaterial wird das Füllmaterial mit Wasser in Zwischenräume zwischen dem Erdkollektormodul 100 und den Wandungen des Schlitzes 90 im Erdreich eingeschwemmt. Auch ist eine Verdichtung des Füllmaterials innerhalb des Schlitzes 90 möglich.

In Fig. 1 ist zusätzlich eine Bewässerungsanlage 80 schematisch dargestellt, die Regenwasser in den Bereich des Erdkollektormoduls 100 leitet. Vorteilhafterweise ist zumindest ein Bestandteil der Bewässerungsanlage 80 am Träger 20 des Erdkollektormoduls 100 montiert oder vormontiert. Alternativ kann der Träger eine Funktion des Bewässerungssystems aufweisen, indem der Träger beispielsweise hohl ausgebildet ist und das Wasser der Bewässerungsanlage im Erdreich verteilt. Zusätzlich kann ein Regenwasserrückhaltebehälter der Bewässerungsanlage vorgeschaltet sein. Alternativ kann die Bewässerung auch durch Oberflächenwasser, Brunnenwasser oder durch Wasser einer Wasserzisterne erfolgen.

Die Figuren 5a und 5b zeigen ein weiteres Ausführungsbeispiel für ein Erdkollektormodul. Ist das Erdkollektormodul 200 in einen Schlitz in das Erdreich eingebracht, wird der Träger 220 für die Positionierung und Fixierung des Kunststoffrohres 210 eigentlich nicht mehr benötigt, da diese Funktion der Positionierung und Fixierung nach der Einbringung durch das umgebende Erdreich übernommen werden könnte. Daher ist der Träger 220 im Idealfall aus einem Material herstellt, das sich nach einer Zeitspanne im Erdreich auflöst möglichst ohne die Umwelt zu belasten. Beispielsweise kann der Träger 220 aus einer Holzkonstruktion gebildet sein. Im Ausführungsbeispiel der Figuren 5a und 5b weist der Träger 220 mehrwelliger Pappe auf. Auf dem Träger 220 aus mehrwelliger Pappe ist das flexible Kunststoffrohr 210 für ein durchlaufendes Rohrsystem als durchgehende Schlaufe über die Ebene des Trägers 220 verlegt. Das flexible Kunststoffrohr 210 ist auf dem Träger 220 durch eine Vielzahl von Klammern 250 befestigt. Die Klammer sind vorzugsweise in den Träger 220 eingeschossen. Vorteilhafterweise umgreifen die Klammern 250 das flexible Kunststoffrohr 210. Ebenfalls sind die Endbereiche 211 und 212 des flexiblen Kunststoffrohres 210 durch Klammern 250 am Träger befestigt. Zum Lösen der Endbereiche 211 und 212 vom Träger 220 werden die die Endbereiche 211 und 212 haltenden Klammern 250 beispielsweise aus dem Träger 220 herausgerissen.

In der Ausgestaltungsvariante des Trägers aus Holz löst sich im Lauf der Zeit das Holz im Erdreich durch Verrottungsprozesse auf und das flexible Kunststoffrohr 210 wird letztendlich allseitig vom Erdreich berührt, so dass ein verbesserter Wärmeübergang nach der Auflösung des Trägers aus Holz erzielt wird. Die Auflösungsprodukte des Holzes sind ebenfalls umweltverträglich.

In der anderen Ausgestaltungsvariante des Trägers 220 aus Pappe löst sich im Lauf der Zeit die Pappe im Erdreich durch Verrottungsprozesse auf und das flexible Kunststoffrohr 210 wird letztendlich allseitig vom Erdreich berührt, so dass ein verbesserter Wärmeübergang nach der Auflösung des Trägers 220 aus Pappe erzielt wird. Die Auflösungsprodukte der Pappe sind ebenfalls umweltverträglich, sofern die Pappe frei von Schwermetallen ist.

Fig. 5b zeigt eine schematische Detailschnittansicht der Befestigung des flexiblen Kunststoffrohres 210 mittels der Klammer 250 im Träger 220 aus zweiwelliger Wellpappe. Die Klammer 250 weist beispielsweise Kunststoff oder Holz auf. Die Klammer 250 weist zwei Spitzen zum Einschießen und eine Anzahl von Widerhaken 251, 252 auf. Die Anzahl der Widerhaken ermöglicht unterschiedliche Fixiertiefen der Klammer 250 im Träger 220 für unterschiedliche Dicken des flexiblen Kunststoffrohres 210.

Die Wellpappe weist im Ausführungsbeispiel der Fig. 5b fünf miteinander verbundene Pappschichten 221, 222, 223, 224 und 225 auf. Zur Verbindung können die Pappschichten 221, 222, 223, 224, 225 beispielsweise miteinander verklebt sein. Zwei unterschiedliche Wellenformen der Schichten 222 und 224 erhöhen dabei die Formstabilität des Trägers 220 aus Wellpappe.

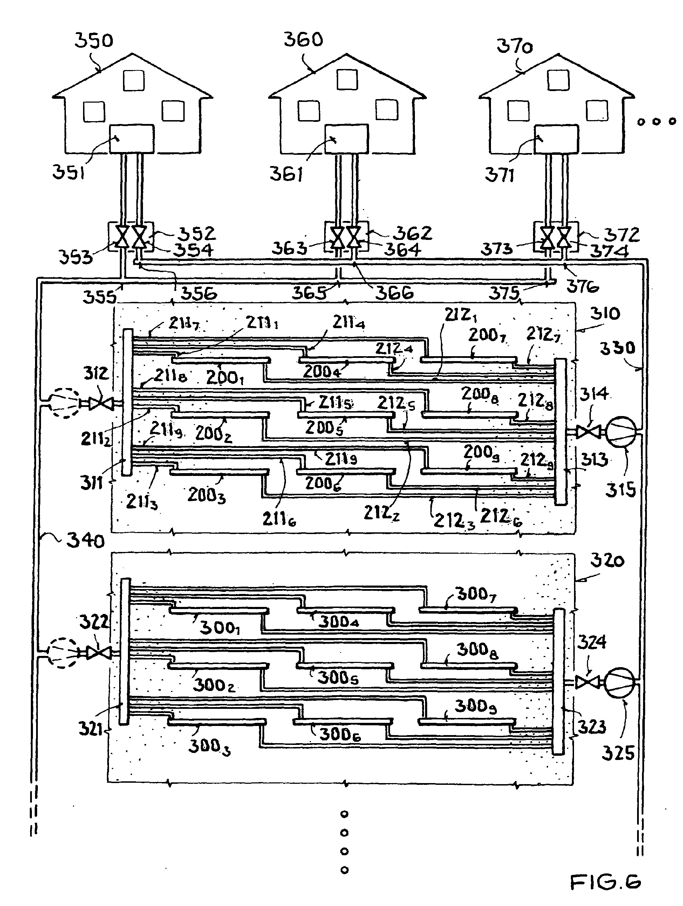

In Fig. 6 ist ein System 300 mit einer Vielzahl von Erdkollektormodulen 200₁ bis 200₉ als Erdwärmevorrichtungen schematisch dargestellt. Im Ausführungsbeispiel der Fig. 6 sind neun Erdkollektormodule 200₁ bis 200₉ in einem siedlungsnahen Feld 310 und weitere Erdkollektormodule 300, bis 300₉ in einem weiteren Feld 320 schematisch dargestellt. In der Praxis können eine wesentlich größere Vielzahl von Erdkollektormodulen und eine wesentlich größere Vielzahl von Feldern mit Erdkollektoren verwendet werden. Dies ist durch Punkte in der Fig. 6 angedeutet. In Fig. 6 sind Erdkollektormodule zweier Felder 310, 320 zu einem System zusammengeschaltet. Jedes Feld 310, 320 weist einen Verteiler 311, 321 und ein Ventil 312, 322 für einen Vorlauf 330 und einen Verteiler 314, 324 und ein Ventil 314, 324 für einen Rücklauf 340 auf. Der Verteiler 311 für den Vorlauf 330 ist mit jedem Endbereich 211₁ bis 211₉ der Erdkollektormodule 200₁ bis 200₉ und der Verteiler 313 für den Rücklauf 340 ist mit jedem Endbereich 212₁ bis 212₉ der Kollektormodule 200₁ bis 200₉ verbunden.

Die Erdkollektormodule 200₁ bis 200₉ sind in einem geschlossenen Kreis mit Vorlauf 330 und Rücklauf 340 zusammengeschlossen, so dass diese einen geschlossenen Kreislauf bilden. Der Vorlauf 330 und der Rücklauf 340 sind im Ausführungsbeispiel der Fig. 6 Stichleitungen. Vorlauf 330 und Rücklauf 340 sind dabei nicht direkt miteinander zur Ausbildung des Kreislaufs verbunden. Der Kreislauf entsteht erst, wenn der Vorlauf 330 und der Rücklauf 340 über eine Energieübergabestelle 352, 362 oder 372 verbunden wird. Hierzu wird die Energieübergabestellen 352, 362 oder 372 geöffnet um den Energiebedarf des Gebäudes 350, 360, 370 zu decken.

Zur Zirkulation eines fließfähigen Kältemittels - das auch als Wärmetauschermedium oder Wärmeträger bezeichnet werden kann - ist in dem geschlossenen Kreislauf zumindest eine Pumpe 315, 325 vorgesehen, die vorzugsweise mit dem Vorlauf 330 verbunden ist. Alternativ kann auch eine Pumpe im Rücklauf vorgesehen sein (in Fig. 6 angedeutet). Ebenfalls ist auch die Kombination von Pumpen im Vorlauf und im Rücklauf vorteilhaft. Die maximale Temperatur des im Kreislauf zirkulierenden Wärmetauschermediums ist dabei nicht größer als die Temperatur des Erdreiches. Das Wärmetauschermedium wird durch die Erdwärme des umgebenden Erdreichs erwärmt. Auf der Seite des Vorlaufs 330 entstehen somit keine Wärmeverluste.

Die Länge der Vorlaufleitung 330 ist unkritisch, da das den Vorlauf 330 umgebende Erdreich zusätzlich zur Erwärmung des Wärmetauschermediums beitragen kann. Hierzu ist der Vorlauf 330 vorteilhafterweise zumindest abschnittsweise nicht wärmeisoliert und vorzugsweise im frostfreien Erdreich (unterhalb der Frostgrenze) verlegt. Das System kann daher vorteilhaft als regionales Niedertemperatur-Nahheizsystem zur Beheizung von Gebäuden 350, 360, 370 insbesondere Wohnhäusern verwendet werden. In Doppelfunktion ist bevorzugt vorgesehen, dass die Gebäude 350, 360, 370 vorzugsweise im Sommer durch das System (natürlich) gekühlt werden können und dabei die Abwärme an das Erdreich über die Erdkollektormodule 200₁ bis 200₉ und 300₁ bis 300₉ abgeben. Vorzugsweise kann hierzu die Wärmepumpe 351, 361, 371 durch einen Bypass umgangen werden. Dies kann auch als natürliche Kühlung bezeichnet werden.

Mit dem Vorlauf 330 und dem Rücklauf 340 sind Energieübergabestellen 352, 362 und 372 über Abzweigungen 355, 356, 365, 366, 375, 376 verbunden. Die Energieübergabestellen 352, 362 und 372 verbinden den Vorlauf 330 und den Rücklauf 340 mit einer für ein jeweiliges Gebäude 350, 360, 370 vorgesehenen Wärmepumpe 351, 361, 371. Im Ausführungsbeispiel der Fig. 6 weisen die Energieübergabestellen 352, 362 und 372 eine Anzahl Ventile 353, 354, 363, 364, 373, 374 für das Wärmetauschermedium auf. Zumindest eines der Ventile ist dabei als Differenzdruckregler ausgebildet. Alternativ oder in Kombination zu einem Differenzdruckregler ist in eine Anzahl von Gebäuden 350, 360, 370 ein Wärmetauscher (in Fig. 6 nicht dargestellt) vorgesehen, der mit dem Vorlauf 330 und dem Rücklauf 340 verbunden ist.

Die Erdkollektormodule 200₁ bis 200₉ und 300₁ bis 300₉ sind Vorzugsweise bezüglich der Erdoberfläche nach Art einer Senkrechten errichtet. Diese können auch als Vertikalkollektoren bezeichnet werden. Vorzugsweise ist eine Anzahl der Erdkollektormodule 200₁ bis 200₉ und 300₁ bis 300₉ in zumindest einem ins Erdreich gefrästen Schlitz angeordnet.

Vorteilhafterweise wird die Fläche der Felder 310, 320 in Doppelfunktion genutzt. Beispielsweise kann die jeweilige Fläche landwirtschaftlich genutzt werden. In einer anderen vorteilhaften Doppelfunktion wird die Fläche durch Sonnenkollektoren in doppelter Hinsicht zu Gewinnung nutzbarer Energie verwendet. Beispielsweise kann eine Photovoltaik-Anlage auf der Fläche errichtet werden, die zur Speisung der Pumpen 315, 325 oder Wärmepumpen 351, 361, 371 mit elektrischer Energie verschaltet werden kann.

In einem Verfahren zu Errichtung eines Systems mit Erdkollektoren zur Nutzung von Erdwärme für eine Mehrzahl von Gebäuden, wird zunächst eine Anzahl von Erdkollektormodule 200₁ bis 200₉ und 300₁ bis 300₉ als Erdwärmevorrichtungen im Erdreich errichtet. Diese dienen der Entnahme von Wärmeenergie aus dem Erdreich. Die Anzahl der benötigten Erdkollektormodule 200₁ bis 200₉ und 300₁ bis 300₉ hängt von der Zahl der zu beheizenden Gebäuden 350, 360, 370 des Systems ab. Je nach Beschaffenheit des Erdreichs und der Zufuhr der Wärme zu den Kollektoren beispielsweise durch Flusswasser, Quellwasser, Regenwasser etc., ist die möglich Energieentnahme durch die Erdkollektormodule 200₁ bis 200₉ und 300₁ bis 300₉ unterschiedlich. Grob überschlagen wird für 1 Kilowatt Wärmebedarf etwa 20m² Erdkollektorfläche benötigt. Wird für die Gesamtzahl der beispielsweise zwanzig Gebäude 350, 360, 370 beispielsweise ein Wärmebedarf von 140 kW, so wird eine Erdkollektorfläche von 2800 m² verwendet. Aufgrund der höheren Effektivität des Gesamtsystems kann dabei eine höhere Energieausbeute und insbesondere eine kurzzeitig sehr hohe Heizleistung erzielt werden.

Zur Errichtung der Erdkollektormodule 200₁ bis 200₉ und 300₁ bis 300₉ wird zunächst eine Anzahl von Schlitzen in das Erdreich gefräst. Beispielsweise wird ein landwirtschaftlich genutztes Feld mit langen, gefrästen Schlitzen durchzogen. Dabei entsteht nur ein geringer Aushub, der nach einer Positionierung der Erdkollektormodule 200₁ bis 200₉ und 300₁ bis 300₉ in den Schlitzen zum Einschwemmen der Erdkollektormodule 200₁ bis 200₉ und 300₁ bis 300₉ in den Schlitzen genutzt wird. Die Erdkollektormodule 200₁ bis 200₉ und 300₁ bis 300₉ sind für eine kostengünstige Positionierung und Errichtung möglichst leicht auszubilden. Die Erdkollektormodule 200₁ bis 200₉ und 300₁ bis 300₉ weisen dabei jeweils einen Träger aus einem formstabilen, im Erdreich auflösbaren, insbesondere verrottbaren Material auf.

Vorzugweise vor dem Einschwemmen werden die Erdkollektormodule 200₁ bis 200₉ und 300₁ bis 300₉ mit dem Vorlauf 330 und dem Rücklauf 340 des Systems verbunden. Vorzugsweise wird der Vorlauf 330 und/oder der Rücklauf 340 unterhalb der Frostgrenze verlegt. Jede Energieübergabestelle 352, 362, 372 jedes Gebäudes 350, 360, 370 wird mit dem Vorlauf 330 und mit dem Rücklauf 340 zu einem geschlossenen Kreislauf verbunden. Weiterhin wird jede Energieübergabestelle 352, 362, 372 mit einer dem jeweiligen Gebäude 350, 360, 370 zugehörigen Wärmepumpe 351, 361, 371 verbunden.

Sind alle Verbindungen für anzuschließende Gebäude erfolgt wird nachfolgend ein Wärmetauschermedium in den geschlossenen Kreislauf eingebracht. Werden weitere Gebäude an das System angeschlossen, sind vorzugsweise von vornherein weitere durch Absperrungen dichte Abzweigstellen zum Anschluss vorgesehen. Ebenfalls können Abzweigstellen zum Anschluss weiterer Erdkollektormodule vorgesehen werden, so dass das System nach Bedarf erweiterbar ist.

Um ein einfaches Einlassen der Erdkollektormodule 200₁ bis 200₉ und 300₁ bis 300₉ in die Schlitze des Erdreichs zu ermöglichen, wird jedes Erdkollektormodul 200₁ bis 200₉ und 300₁ bis 300₉ formstabil mit einem auf einem flächigen Träger angeordnetem durchgehenden Rohrsystem ausgebildet. Die Schlitze können in diesem Ausführungsbeispiel besonders schmal ausgebildet werden. Ein Einstieg einer Person in einen Schlitz zur Positionierung eines Erdkollektormoduls 200₁ bis 200₉ und 300₁ bis 300₉ ist dabei nicht notwendig.

Die Erfindung ist nicht auf die dargestellten Ausgestaltungsvarianten der Figuren 1 bis 6 beschränkt. Beispielsweise lässt sich jede andere Form einer Schlaufe des auf dem Träger positionierten flexiblen Kunststoffrohres verwenden. Auch ist es möglich andere als die dargestellten Befestigungselemente zu verwenden ohne den Rahmen der Erfindung zu verlassen.

### Bezugszeichenliste

- 1,350,360,370: Haus, Gebäude
- 2, 351, 361, 371: Baueinheit der Wärmepumpe, Kompressor, Steuereinheit
- 3: Heizungsanlage
- 10, 210: Kunststoffrohr
- 11, 12, 211, 212, 211, bis 211₉, 212₁ bis 212₉: Endbereich des Kunststoffrohres
- 13: Entlüftungsrohr
- 20, 220: Träger
- 50,51,250: Befestigungselement
- 52: Befestigungsöffnung
- 53: Aufnahme
- 80: Bewässerungsanlage
- 90: Schlitz im Erdreich
- 100, 200, 200₁ bis 200₉, 300₁ bis 300₉: Erdkollektormodul
- 221, 222, 223, 224, 225: Pappschicht
- 251,252: Widerhaken
- 310,320: Agrarfläche
- 311, 313, 321, 323: Verteiler
- 312, 314, 322, 324, 353, 354, 363, 364, 373, 374: Ventil
- 315, 325: Pumpe
- 330: Vorlauf, Rohr
- 340: Rücklauf, Rohr
- 350, 360, 370: Gebäude, Wohnhaus
- 355, 356, 365, 366, 375, 376: Abzweigung, T-Stück
- 352, 362, 372: Energieübergabestelle
- 351, 361, 371: Wärmepumpe
- L: Länge des Erdkollektormoduls
- H: Höhe des Erdkollektormoduls
- B: Breite des Erdkollektormoduls
- R_{L}, R_{H}: Rastermaß einer Gitterstruktur
- H_{U}: Überstandsmaß
- B_{S}: Breite des Schlitzes im Erdreich

## Patentansprüche

1. Erdkollektormodul (100, 200) für eine Wärmepumpe
- mit einem formstabilen Träger (20, 220), der eine ebene Form aufweist, und
- mit einem flexiblen Kunststoffrohr (10, 210), das für ein durchlaufendes Rohrsystem als durchgehende Schlaufe über die Ebene des formstabilen Trägers (20, 220) verlegt und auf dem formstabilen Träger (20, 220) befestigt ist, **dadurch** B der formstabile Träger (20, 220) ein im Erdreich auflösbares Material aufweist.

2. Erdkollektormodul (100, 200) nach Anspruch 1,
bei dem ein Endbereich (11, 12, 211, 212) des flexiblen Kunststoffrohres (10, 210) in einer Vormontageposition an dem Träger (20, 220) lösbar befestigt ist.

3. Erdkollektormodul (100, 200) nach einem der vorhergehenden Ansprüche,
mit einem separaten Befestigungsmittel (50, 51, 250) zur Befestigung des flexiblen Kunststoffrohres (10, 210) am Träger (20, 220).

4. Erdkollektormodul (100) nach einem der vorhergehenden Ansprüche,
bei dem an dem Träger (20) ein Bewässerungssystem (80) befestigt ist.

5. Erdkollektormodul (100, 200) nach einem der vorhergehenden Ansprüche, bei dem das flexible Kunststoffrohr (10, 210) zwischen zwei Schichten des Trägers (20, 220) angeordnet ist.

6. Erdkollektormodul (200) nach einem der vorhergehenden Ansprüche, bei dem das auflösbare Material verrottbares Material, insbesondere Holz oder Pappe ist.

7. System (300) mit einem aus einer Vielzahl von Erdkollektorsmodulen (100, 200) nach einem der vorhergehenden Ansprüche errichteten Erdkollektor, der in einem geschlossenen Kreis mit Vorlauf (330) und Rücklauf (340) zusammengeschlossen ist,
- mit einer Mehrzahl von Energieübergabestellen (352, 362, 372) für Wärmepumpen (351, 361, 371) von verschiedenen Gebäuden (350, 360, 370), die mit dem Vorfauf (330) und dem Rücklauf (340) verbunden sind.

8. Verwendung einer agrarwirtschaftlich oder für eine Photovoltaikanlage genutzte Fläche für die Errichtung eines Erdkollektors eines Systems (300) nach Anspruch 7.

9. Verfahren zur Errichtung eines Erdkollektors, indem
- ein Erdkollektormodul (100, 200) mit einem formstabilen Träger (20, 220) und mit einem flexiblen, als durchlaufendes Rohrsystem auf dem Träger (20, 220) angeordnetem Kunststoffrohr (10, 210) montiert wird, wobei der formstabile Träger (20, 220) ein im Erdreich auflösbares Material aufweist,
- ein Schlitz (90) in das Erdreich gefräst wird,
- das Erdkollektormodul (100, 200) in den Schlitz (90) eingeführt wird, und
- der Schlitz (90) mit einem Füllmaterial verfüllt wird.

10. Verfahren nach Anspruch 9,
- bei dem Endbereiche (11, 12, 211, 212) des flexiblen Kunststoffrohres (10, 210) aus dem Schlitz (90) herausgeführt werden, und
- bei dem die Endbereiche (11, 12, 211, 212) vor der Herausführung aus dem Schlitz (90) von dem formstabilen Träger (20, 220) gelöst werden.

11. Verfahren nach einem der Ansprüche 9 oder 10, bei dem die Breite (B_{S}) des Schlitzes (90) im Erdreich maximal das Dreifache der Breite (B) des Erdkollektormoduls (100, 200) beträgt.

12. Verfahren nach Anspruch 11, bei dem die Breite (B) des Erdkollektormoduls zwischen 3 cm und 10 cm beträgt.

13. Verfahren nach einem der Ansprüche 9 bis 12, bei dem das Füllmaterial das aus dem Erdreich herausgefräste Material ist.

14. Verfahren nach einem der Ansprüche 9 bis 13, bei dem der Schlitz eine Tiefe aufweist die mindestens der Summe der Frosttiefe des Bodens und der Höhe des Erdkollektormoduls entspricht.

## Claims

1. Ground collector module (100, 200) for a heat pump comprising
- a support (20, 220) which is of stable shape and has a flat form and
- a flexible plastics material pipe (10, 210), which for a continuous pipe system is placed as an uninterrupted loop over the plane of the support (20, 220) of stable shape and fastened to the support (20, 220) of stable shape,
**characterised in that** the support (20, 220) of stable shape comprises a material soluble in soil.

2. Ground collector module (100, 200) according to claim 1, in which an end region (11, 12, 211, 212) of the flexible plastics material pipe (10, 210) is detachably fastened in a premounting position to the support (20, 220).

3. Ground collector module (100, 200) according to one of the preceding claims, comprising a separate fastening means (50, 51, 250) for fastening the flexible plastics material pipe (10, 210) to the support (20, 220).

4. Ground collector module (100) according to any one of the preceding claims, in which an irrigation system (80) is fastened to the support (20).

5. Ground collector module (100, 200) according to any one of the preceding claims, in which the flexible plastics material pipe (10, 210) is arranged between two layers of the support (20, 220).

6. Ground collector module (200) according to any one of the preceding claims, in which the soluble material is decomposable material, particularly wood or cardboard.

7. System (300) comprising a ground collector, which is set up from a plurality of ground collector modules (100, 200) according to any one of the preceding claims and which is amalgamated into a closed circuit with forward run (330) and return run (340), comprising
- a plurality of energy transfer points (352, 362, 372) for heat pumps (351, 361, 371) of different buildings (350, 360, 370), which are connected with the forward run (330) and the return run (340).

8. Use of an area, which is employed in agriculture or for a photovoltaic installation, for the setting-up of a ground collector of a system (300) according to claim 7.

9. Method of setting up a ground collector, in that
- a ground collector module (100, 200), which comprises a support (20, 220) of stable shape and a flexible plastics material pipe (10, 210) arranged as an uninterrupted pipe system on the support (20, 220), is mounted, wherein the support (20, 220) of stable shape comprises a material soluble in soil,
- a slot (90) is cut into the soil,
- the ground collector module (100, 200) is introduced into the slot (90) and
- the slot (90) is filled with a filling material.

10. Method according to claim 9,
- in which end regions (11, 12, 211, 212) of the flexible plastics material (10, 210) are led out of the slot (90) and
- in which the end regions (11, 12, 211, 212) are detached from the support (20, 220) of stable shape before being led out of the slot (90).

11. Method according to one of claims 9 and 10, in which the width (B_{S}) of the slot (90) in the soil is at most three times the width (B) of the ground collector module (100, 200).

12. Method according to claim 11, in which the width (B) of the ground collector module is between 3 centimetres and 10 centimetres.

13. Method according to any one of claims 9 to 12, in which the filling material is the material cut out of the soil.

14. Method according to any one of claims 9 to 13, in which the slot has a depth corresponding with at least the sum of the frost depth of the ground and the height of the ground collector module.

## Revendications

1. Module collecteur de sol (100,200) pour une pompe à chaleur comprenant :
• un support frontal indéformable (20,200) de forme plane et
• un tube flexible en matière plastique (10,210) qui est posé au-dessus du plan du support indéformable (20,220) en tant que passant pour un système tubulaire à circulation et fixé sur le support indéformable (20,220) **caractérisé en ce que** le support indéformable (20,220) présente un matériau qui se décompose dans la terre.

2. Module collecteur de sol (100,200) selon la revendication 1 **caractérisé en ce qu'**une zone d'extrémité (11,12,211,212) du tube flexible en matière plastique (10,210) est fixée de façon amovible au support (20,220) dans une position de prémontage.

3. Module collecteur de sol (100,200) selon l'une des revendications précédentes comportant un moyen séparé de fixation (50,51,250) pour la fixation du tube flexible en matière plastique (10,210) au support (20,220).

4. Module collecteur de sol (100,200) selon l'une des revendications précédentes **caractérisé en ce qu'**est fixé au support (20) un système d'irrigation.

5. Module collecteur de sol (100) selon l'une des revendications précédentes **caractérisé en ce que** le tube flexible en matière plastique (10,210) est disposé entre deux couches du support (20,220).

6. Module collecteur de sol (200) selon l'une des revendications précédentes **caractérisé en ce que** le matériau qui se décompose est un matériau qui pourrit, en particulier du bois ou du carton.

7. Système (300) comportant une multitude de modules collecteurs de sol (100,200) selon l'une des revendications précédentes de collecteur de sol installé qui est inclus dans un circuit fermé présentant une arrivée (330) et un retour (340) avec :
• une pluralité de points de fourniture d'énergie (352,362,372) pour pompes à chaleur (351,361,371) de différents bâtiments (350,360,370) qui sont reliés à l'arrivée (330) et au retour (340).

8. Utilisation d'une surface utile agraire ou de celle d'une installation photovoltaïque pour l'installation d'un collecteur de sol d'un système (300) selon la revendication 7.

9. Procédé pour l'installation d'un collecteur de sol selon lequel:
• on monte un module de collecteur de sol (100,200) avec un support (20,200) indéformable et avec un tube flexible en matière plastique sur le support (20,220) en tant que système tubulaire traversant, dans lequel le support indéformable (20,220) présente un matériau décomposable dans le sol,
on fraise une fente (90) dans la terre,
• on introduit le module collecteur de sol dans la fente (90),
• on comble la fente avec un matériau de remplissage.

10. Procédé selon la revendication 9 dans lequel:
• on sort de la fente (90) la zone d'extrémité (11,12,211,212) du tube flexible en matière plastique (10,210), et
• on libère la zone d'extrémité (11,12,211,212) du support indéformable (20,220) avant sa sortie de la fente (90).

11. Procédé selon la revendication 9 ou 10 dans lequel la largeur (Bₛ) de la fente (90) dans le sol est au maximum égale à trois fois la largeur (B) du module collecteur de sol (100,200).

12. Procédé selon la revendication 11 dans lequel la largeur (B) du module collecteur de sol est comprise entre 3cm et 10 cm.

13. Procédé selon l'une des revendications 9 à 12 dans lequel le matériau de remplissage est le matériau provenant du fraisage de la terre.

14. Procédé selon l'une des revendications 9 à 13 dans lequel la fente présente une profondeur égale au moins à la somme de la profondeur de gelée du sol et de la hauteur du module collecteur de sol.
